# FASCICULE DE BREVET EUROPEEN

(11) **EP 3 463 950 B1**
(45) Date de publication et mention de la délivrance du brevet: **30.03.2022**
(21) Numéro de dépôt: 17727646.6
(22) Date de dépôt: 10.05.2017
(51) Int. Cl.: B60J 5/10

(54) **DOUBLURE INTERNE DE VOLET ARRIÈRE**
INNEN VERKLEIDUNG DER HINTEREN KLAPPE
INNER LINING OF REAR DOOR

(30) Priorité: 27.05.2016 FR 1654811
(43) Date de publication de la demande: 10.04.2019
(73) Titulaire: PSA Automobiles SA, 78300 Poissy (FR)
(72) Inventeur: BENANE, Said, 94550 Chevilly Larue (FR)
(86) Numéro de dépôt international: PCT/FR2017/051117
(87) Numéro de publication internationale: WO 2017/203120

(56) Documents cités:
- WO-A1-00/15454
- CN-U- 204 726 200
- DE-A1-102005 054 069
- DE-A1-102014 202 155
- FR-B1- 2 953 770
- US-A1- 2008 030 047

## Description

La présente invention concerne une doublure interne de volet arrière d'un véhicule.

Le volet arrière d'un véhicule comprend généralement une peau externe et une doublure interne, qui sont fixées l'une à l'autre.

Une doublure interne a notamment pour fonctions de réduire les vibrations du volet arrière lorsque le véhicule est en circulation, et d'absorber une partie des forces lorsque le véhicule subit un choc arrière.

Les documents US 7 537 267 et US 7 618 083 décrivent des doublures internes. Le document US20080030047 décrit une doublure interne de volet arrière renforçant la rigidité à la torsion et le document DE102005054069 décrit un volet arrière en deux parties, dont au moins une partie comporte une doublure interne.

Cependant, un inconvénient de ces doublures internes est qu'elles ne permettent pas d'optimiser la transmission des forces en cas de choc. En effet, en cas de choc, les forces appliquées sur le volet arrière ne sont pas réparties de manière homogène.

En outre, les doublures internes augmentent sensiblement le poids du véhicule, et il est donc important de limiter leur poids autant que possible.

Il existe donc un besoin de doublures internes, qui permettent d'optimiser la réaction du volet arrière en cas de choc, tout en limitant l'augmentation de poids du véhicule. La présente invention vient améliorer la situation.

A cet effet, l'invention propose une doublure interne d'un volet arrière d'un véhicule, constitué d'un panneau présentant deux parties caractérisée en ce que l'une des parties présente
- un cadre constitué par les bords latéraux et les bords transversaux de ladite partie de la doublure, deux montants s'étendant entre les bords transversaux ainsi que deux entretoises s'étendant chacune entre un montant et le bord latéral adjacent, définissant dans ladite partie de la doublure une ouverture centrale et deux ouvertures de part et d'autre de ladite ouverture centrale,
- un ensemble de pattes, destinées à être fixées sur une peau externe du volet arrière, l'ensemble de pattes comprenant au moins :
- deux pattes disposées respectivement sur un montant à la périphérie de l'ouverture centrale et à proximité de la jonction entre le montant et une entretoise
- deux pattes, respectivement disposées sur une entretoise.

Ainsi, la doublure selon l'invention permet d'obtenir à la fois un allègement du volet arrière en proposant une partie de doublure de volet évidée tout en maintenant une rigidité suffisante au volet, limitant notamment la déformation de la doublure en cas de choc.

En effet, lorsqu'un véhicule subit un choc arrière, les efforts de sollicitation se concentrent au centre du volet arrière et une doublure dudit volet arrière présentant un évidement d'allègement central aurait alors tendance à se déformer au niveau dudit évidement.

Avantageusement, une doublure selon l'invention permet de limiter la déformation de l'ouverture centrale, les pattes à la périphérie de l'ouverture centrale permettant de limiter la déformation, l'effort étant transmis aux entretoises puis aux bords latéraux de la doublure interne.

L'ouverture centrale peut présenter une forme sensiblement rectangulaire.

Chaque ouverture latérale peut également présenter une forme sensiblement rectangulaire.

Selon un mode de réalisation de l'invention, l'ensemble de pattes comprend deux pattes disposées sur chaque montant à la périphérie de l'ouverture centrale et à proximité de chaque jonction entre un montant et une des entretoises.

Selon un mode de réalisation de l'invention, chaque patte sur une entretoise est ménagée à la périphérie d'une ouverture latérale.

Lorsque les deux ouvertures latérales sont positionnées l'une au-dessus de l'autre, une patte est ménagée de préférence sur l'entretoise qui les sépare, à proximité de la périphérie de l'ouverture latérale supérieure. L'ensemble de pattes peut en outre comprendre deux pattes, respectivement disposées sur les bords inférieurs des ouvertures latérales inférieures.

Les pattes peuvent être formées par découpe et emboutissage d'un panneau métallique constituant la doublure du volet arrière.

L'invention propose également un véhicule, caractérisé en ce qu'il comprend un volet arrière comportant :
- une peau externe, et
- une doublure interne telle que décrite ci-dessus.

D'autres caractéristiques et avantages de l'invention apparaîtront encore à la lecture de la description qui va suivre. Celle-ci est purement illustrative et doit être lue en regard des dessins annexés sur lesquels :
- la Figure 1 est une vue semi-transparente du volet arrière d'un véhicule selon l'invention ;
- la Figure 2 est une vue de la peau externe du volet arrière de la Figure 1 ;

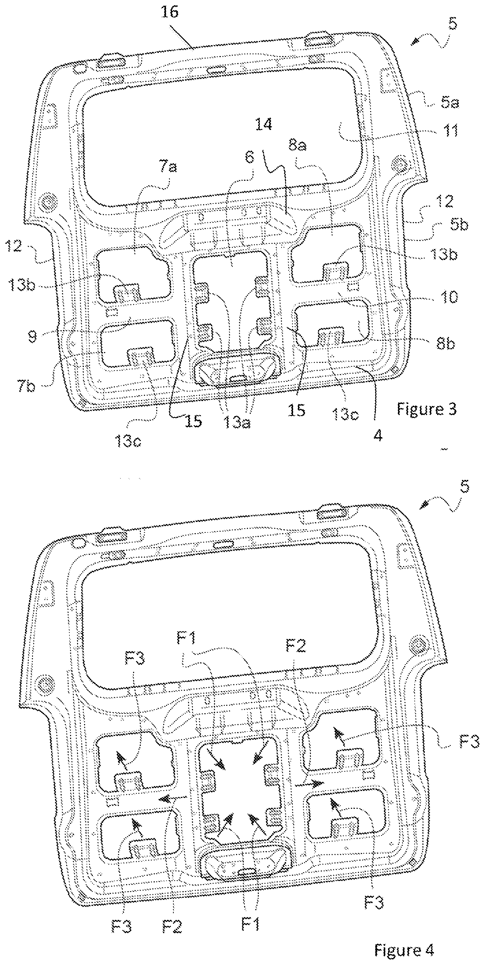

- la Figure 3 est une vue de la doublure interne du volet arrière de la Figure 1 ; et
- la Figure 4 est une vue similaire à la Figure 3, montrant les forces qui s'exercent sur la doublure interne lors d'un choc arrière subi par le véhicule.

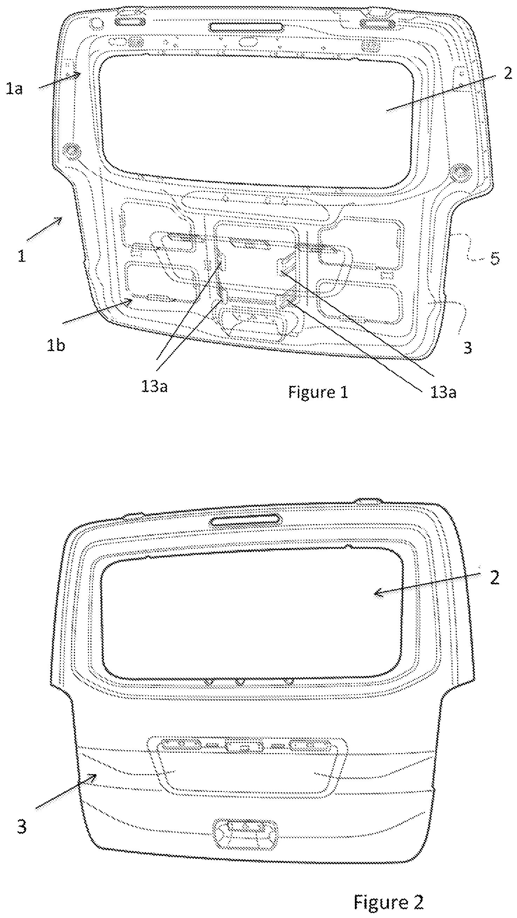

La Figure 1 représente un volet arrière 1 de véhicule. Le véhicule comporte un volet arrière 1 et une lunette arrière 2. La lunette arrière 2 est montée sur le volet arrière 1.

Le volet arrière 1 comporte une peau externe 3 et une doublure interne 5, qui sont fixées l'une à l'autre.

Le volet arrière 1 peut également comporter une garniture (non représentée). Dans ce cas, la garniture est fixée sur la doublure interne 5, du côté opposé à la peau externe 3. Le volet arrière 1 présente une partie supérieure 1a et une partie inférieure 1b, la partie supérieure 1a étant par exemple l'extrémité du volet 1 montée articulée sur la partie haute de l'ouverture arrière de la caisse d'un véhicule et pourvue de la lunette arrière 2.

La doublure interne 5 est constituée d'un panneau en tôle métallique partagée en deux parties, supérieure 5a et inférieure 5b, correspondant aux parties supérieures et inférieures du volet 1 et de la peau externe 3.

La partie supérieure 5a comporte un cadre constitué par les bords latéraux 12 de la doublure 5, par le bord transversal supérieur 16 de ladite doublure s'étendant entre les bords latéraux 12 et par un bord transversal 14 inférieur parallèle au bord transversal supérieur 16, le cadre définissant un orifice 11, qui, en position de montage, est placé au droit de la lunette arrière 2.

La partie inférieure 5b comprend un cadre constitué par les bords latéraux 12 de la doublure 5 et les bords transversaux 4, 14 de ladite partie inférieure 5b de la doublure qui s'étendent entre les bords latéraux 12. Le bord transversal inférieur 4 de la doublure 5 constitue un bord transversal de la partie inférieure 5b, tandis que l'autre bord transversal 14 correspond à la partie de panneau s'étendant sous l'orifice 11 de la partie supérieure 5a de la doublure 5.

Entre les deux bords transversaux 4, 14 du cadre de la partie inférieure 5b, s'étendent deux montants 15. De préférence ces montants 15 s'étendent parallèles l'un à l'autre et aux bords latéraux 12 de la doublure. En outre, deux entretoises 9, 10 s'étendent chacune entre un montant 15 et le bord latéral adjacent 12. Ces montants 15 et ces entretoises 9, 10 définissent ainsi dans la partie inférieure 5b de la doublure 5, une ouverture centrale 6, entre les montants 15 et de part et d'autre de ladite ouverture centrale 6, deux ouvertures 7a, 7b ou 8a, 8b entre une entretoise 9, 10 et un bord transversal 4, 14. La partie inférieure 5b de la doublure présente ainsi cinq ouvertures.

Ainsi, l'ouverture centrale 6 est disposée sensiblement au centre de la partie inférieure 5b.

Dans le mode de réalisation de l'invention représenté, l'ouverture centrale 6 présente une forme rectangulaire. En variante, l'ouverture centrale 6 peut présenter une forme différente, par exemple ovoïde.

La portion inférieure 5b comprend donc deux paires d'ouvertures latérales 7a, 7b, et 8a, 8b, qui sont disposées de part et d'autre de l'ouverture centrale 6. Chaque ouverture latérale 7a, 7b, 8a, 8b peut présenter une forme globalement rectangulaire. En variante, chaque ouverture latérale 7a, 7b, 8a, 8b peut présenter une forme différente, par exemple ovoïde.

Les ouvertures latérales 7a, 7b, 8a, 8b d'une paire sont disposées l'une au-dessus de l'autre, séparées par une entretoise 9, 10.

Chaque entretoise 9, 10 s'étend entre un montant 15 de l'ouverture centrale 6 et un bord latéral 12 de la doublure interne 5.

Les entretoises 9, 10 présentent par exemple une forme rectangulaire, et s'étendent, en position de montage, dans une direction sensiblement horizontale parallèle aux bords transversaux 4, 14 et 16 de la doublure 5.

La portion inférieure 5b comprend en outre un ensemble de pattes 13, qui sont destinées à être fixées sur la peau externe 3, par exemple par collage.

L'ensemble de pattes 13 comprend au moins deux pattes 13a, respectivement disposées sur un montant 15 à la périphérie de l'ouverture centrale 6 et à proximité de la jonction entre un montant 15 et une entretoise 9, 10.

Dans l'exemple représenté, l'ensemble de pattes 13 comprend quatre pattes 13a, disposées sur les montants latéraux 15 à la périphérie de l'ouverture centrale 6, de part et d'autre de la jonction entre le montant 15 et chaque entretoise 9, 10. Par exemple selon un mode préféré, on prévoit deux pattes 13a positionnées de part et d'autre de la jonction.

L'ensemble de pattes 13 comprend en outre au moins deux pattes 13b, respectivement disposées sur une entretoise 9, 10, de préférence à la périphérie de l'ouverture latérale supérieure 7a, 8a.

Dans l'exemple représenté, l'ensemble de pattes 13 comprend également deux pattes 13c, disposées sur le bord transversal inférieur 4, au niveau du bord inférieur des ouvertures latérales inférieures 7b et 8b.

Les pattes 13a, 13b, 13c peuvent être formées par découpe et emboutissage du panneau formant la doublure 5.

En se référant à la Figure 5, on décrit ci-dessous le fonctionnement du volet arrière 1.

Lorsque le véhicule subit un choc arrière, les efforts de sollicitation se concentrent au centre du volet arrière 1.

En conséquence, l'ouverture centrale 6 a tendance à se déformer, comme symbolisé par les flèches F1. Les pattes 13a permettent de limiter la déformation.

L'effort est ensuite transmis aux entretoises 9, 10, par les pattes 13a puis aux bords latéraux 12 de la doublure interne 5, comme symbolisé par les flèches F2.

Simultanément, les pattes 13a, 13b et 13c transmettent l'effort à la peau externe 3.

L'invention permet ainsi une bonne répartition des efforts sur le volet arrière 1.

De plus, les ouvertures 6, 7a, 7b, 8a, 8b permettent de réduire la masse de la doublure interne 5, donc du volet arrière 2, ce qui permet d'alléger le véhicule 1.

En outre, l'invention présente également des avantages en manœuvre et en fatigue. Elle permet également d'obtenir une bonne répartition des forces lors de la fermeture du volet arrière, et de diminuer les vibrations en circulation.

## Revendications

1. Doublure interne (5) d'un volet arrière d'un véhicule, constitué d'un panneau présentant deux parties (5a, 5b) **caractérisée en ce que** l'une des parties (5b) présente
- un cadre constitué par les bords latéraux (12) et les bords transversaux (4, 14) de ladite partie (5b) de la doublure, deux montants (15) s'étendant entre les bords transversaux (4, 14) ainsi que deux entretoises (9, 10) s'étendant chacune entre un montant (15) et le bord latéral adjacent (12), définissant dans ladite partie de la doublure une ouverture centrale (6) rectangulaire, les bords transversaux (4, 14) et les montants (15) formant les bords de l'unique ouverture centrale (6), et deux ouvertures (7a, 7b ; 8a, 8b) de part et d'autre de ladite ouverture centrale (6) ,
- un ensemble de pattes (13), destinées à être fixées sur une peau externe du volet arrière, l'ensemble de pattes (13) comprenant au moins :
- deux pattes (13a) disposées respectivement sur un montant (15) à la périphérie de l'ouverture centrale (6) et à proximité de la jonction entre le montant (15) et une entretoise (9, 10)
- deux pattes (13b), respectivement disposées sur une entretoise (9, 10).

2. Doublure interne selon la revendication 1, **caractérisée en ce que** chaque ouverture latérale (7a, 7b, 8a, 8b) présente une forme sensiblement rectangulaire.

3. Doublure interne selon l'une quelconque des revendications 1 à 2, **caractérisée en ce que** l'ensemble de pattes (13) comprend deux pattes (13a) disposées sur chaque montant (15) à la périphérie de l'ouverture centrale (6) et à proximité d'une jonction entre le montant (15) et une entretoise (9, 10).

4. Doublure interne selon l'une quelconque des revendications 1 à 3, **caractérisée en ce que** chaque patte (13b) sur une entretoise (9, 10) est ménagée à la périphérie d'une ouverture latérale (7a, 7b ; 8a, 8b).

5. Doublure interne selon la revendication 4, **caractérisée en ce que** la patte (13b) est ménagée de préférence sur l'entretoise (9, 10) à proximité de la périphérie de l'ouverture latérale supérieure (7a, 8a).

6. Doublure interne selon l'une quelconque des revendications 1 à 3, **caractérisée en ce que** l'ensemble de pattes (13) comprend en outre deux pattes (13c), respectivement disposées sur les bords inférieurs des ouvertures latérales inférieures (7b, 8b).

7. Véhicule (1), **caractérisé en ce qu'**il comprend un volet arrière (2) comportant :
- une peau externe, et
- une doublure interne (5) selon l'une quelconque des revendications 1 à 6.

## Patentansprüche

1. Innenauskleidung (5) einer Heckklappe eines Fahrzeugs, bestehend aus einer Platte, die zwei Teile (5a, 5b) aufweist, **dadurch gekennzeichnet, dass** eines der Teile (5b)
- einen Rahmen, der aus den Seitenrändern (12) und den Querrändern (4, 14) des Futterrahmens (5b), zwei sich zwischen den Querrändern (4, 14) erstreckenden Ständern (15) und zwei sich jeweils zwischen einem Ständer (15) und dem benachbarten Seitenrand (12) erstreckenden Stegen (9, 10) besteht, die in dem Futterrahmenabschnitt eine rechteckige Mittelöffnung (6) definieren, wobei die Querränder (4, 14) und die Ständer (15) die Ränder der einzigen Mittelöffnung (6) bilden, und zwei (7a, 7b; 8a, 8b) beiderseits der zentralen Öffnung (6),
- eine Gruppe von Laschen (13), die dazu bestimmt sind, an einer Außenhaut der hinteren Klappe befestigt zu werden, wobei die Gruppe von Laschen (13) mindestens Folgendes umfasst:
- zwei Laschen (13a), die jeweils an einem Pfosten (15) am Umfang der zentralen Öffnung (6) und in der Nähe der Verbindung zwischen dem Pfosten (15) und einer Strebe (9, 10) angeordnet sind,
- zwei Laschen (13b), die jeweils auf einem Abstandhalter (9, 10) angeordnet sind.

2. Innenfutter nach Anspruch 1, **dadurch gekennzeichnet, dass** jede seitliche Öffnung (7a, 7b; 8a, 8b) eine im Wesentlichen rechteckige Form aufweist.

3. Innenfutter nach einem der Ansprüche 1 bis 2, **dadurch gekennzeichnet, dass** die Anordnung von Laschen (13) zwei Laschen (13a) umfasst, die an jedem Ständer (15) am Umfang der zentralen Öffnung (6) und in der Nähe einer Verbindung zwischen dem Ständer (15) und einem Abstandshalter (9, 10) angeordnet sind.

4. Innenfutter nach einem der Ansprüche 1 bis 3, **dadurch gekennzeichnet, dass** jeder Ansatz (13) auf einem Abstandshalter (9, 10) am Umfang einer seitlichen Öffnung (7a, 7b) ausgebildet ist; 8a, 8b.

5. Innenfutter nach Anspruch 4, **dadurch gekennzeichnet, dass** die Lasche (13b) vorzugsweise an der Strebe (9, 10) in der Nähe des Umfangs der oberen seitlichen Öffnung (7a, 8a) ausgebildet ist.

6. Innenfutter nach einem der Ansprüche 1 bis 3, **dadurch gekennzeichnet, dass** die Gesamtheit der Laschen (13) ferner zwei Laschen (13c) umfasst, die jeweils an den unteren Rändern der unteren Seitenöffnungen (7b, 8b) angeordnet sind.

7. Fahrzeug (1), **dadurch gekennzeichnet, dass** es eine hintere Klappe (2) umfasst, die umfasst:
- eine äußere Haut und
- eine Innenauskleidung (5) nach einem der Ansprüche 1 bis 6.

## Claims

1. Internal lining (5) of a rear flap of a vehicle, consisting of a panel having two parts (5a, 5b) **characterized in that** one of the parts (5b) has
- a frame consisting of the side edges (12) and the transverse edges (4, 14) of said lining part (5b), two posts (15) extending between the transverse edges (4, 14) and two spacers (9, 10) each extending between a post (15) and the adjacent side edge (12), defining in said lining part a rectangular central opening (6), the transverse edges (4, 14) and posts (15) forming the edges of the single central opening (6), and two openings (6) 7a, 7b; 8a, 8b) on either side of said central opening (6),
- a set of lugs (13), intended to be fixed to an outer skin of the rear flap, the set of lugs (13) comprising at least:
- two lugs (13a) arranged respectively on a post (15) at the periphery of the central opening (6) and near the junction between the post (15) and a spacer (9, 10),
- two lugs (13b), respectively arranged on a spacer (9, 10).

2. Internal lining according to claim 1, **characterized in that** each lateral opening (7a, 7b; 8a, 8b) has a substantially rectangular shape.

3. Internal lining according to any one of Claims 1 to 2, **characterized in that** the set of lugs (13) comprises two lugs (13a) arranged on each upright (15) at the periphery of the central opening (6) and close to a junction between the upright (15) and a spacer (9, 10).

4. Internal lining according to any one of claims 1 to 3, **characterized in that** each lug (13) on a spacer (9, 10) is provided at the periphery of a lateral opening (7a, 7b; 8a, 8b).

5. Internal lining according to claim 4, **characterized in that** the lug (13b) is preferably provided on the spacer (9, 10) near the periphery of the upper lateral opening (7a, 8a).

6. Internal lining according to any one of claims 1 to 3, **characterized in that** the set of lugs (13) further comprises two lugs (13c), respectively arranged on the lower edges of the lower lateral openings (7b, 8b).

7. Vehicle (1), **characterized in that** it comprises a rear flap (2) comprising:
- external skin, and
- an inner lining (5) according to any one of claims 1 to 6.
